Europäisches Patentamt

European Patent Office

Office européen des brevets

(11) Publication number: **0 490 413 A1**

# EUROPEAN PATENT APPLICATION

(21) Application number: **91202792.7**

(22) Date of filing: **29.10.91**

(51) Int. Cl.⁵: **B29C 31/00**, B29C 45/14, B29C 67/18

(30) Priority: **14.12.90 SE 9003999**

(43) Date of publication of application:
**17.06.92 Bulletin 92/25**

(84) Designated Contracting States:
**AT BE CH DE DK ES FR GB GR IT LI LU NL**

(71) Applicant: **Sunnex Aktiebolag
Box 116**

**S-686 00 Sunne(SE)**

(72) Inventor: **Ericsson, Lars Eric
Gettjärn
S-686 00 Sunne(SE)**

(74) Representative: **Hynell, Magnus
Hynell Patenttjänst AB, Box 2236
S-683 02 Hagfors(SE)**

(54) Method relating to fastening an object in another object.

(57) The present invention relates to a method when fastening by curing or fastening by molding at least one object (3,4), preferably an object made of metal or a rigid plastic material, in the surface of an object (2), made of rubber or a plastic material and which is shaped in a molding cavity (17) in a molding tool, which molding cavity in a first direction is defined by that side of said object, which is to be fastened by curing or molding, said object being positioned in a first tool part (11'), and in directions perpendicular to said first direction is defined by at least one second tool part (12), which said first and second tool parts are designed to be pushed towards and away from each other, when the tool is to be closed and opened up respectively. Said object (3,4) constitutes one part of a large retainer (30,40) having a substantially flat extension, which encloses said object. Said retainer is positioned between said first and second tool parts, the object being positioned in said first tool part, after which said rubber or plastic material is filled in said molding cavity (17), the excess of liquid rubber or plastic material, which is pressed out of the molding cavity being stopped from coming in contact with that part of the molding tool, in which said object is positioned, since that part of said retainer, which encloses said object, extends in an obstructing way between said first and second tool parts.

Fig 7

## Technical field

The present invention relates to a method of fastening by means of curing or fastening by means of molding at least one object of a metal or a rigid plastic material, in the surface of an object of rubber or plastic, which is shaped in a molding cavity in a molding tool, which molding cavity in a first direction is defined by that side of said object which is to be fastened by curing or by molding, said object being positioned in a first tool part, and in directions perpendicular to said first direction is defined by at least one second tool part, which first and second tool parts are designed to be moved towards and away from each other, when the tool is to be closed and opened up respectively.

## Background art

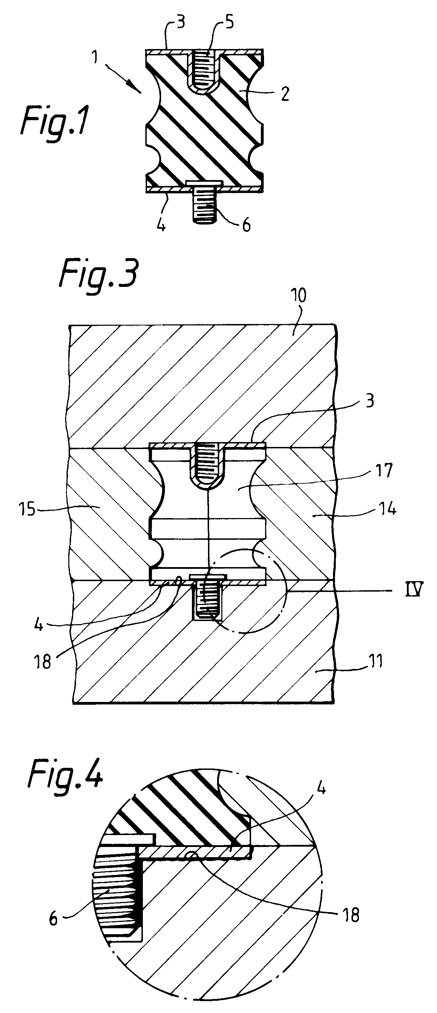

Damping elements of the kind, which in one of many feasible embodiments is shown in a longitudinal section in Fig. 1, are used in many technical fields, chiefly for machines of various types, and large amounts are manufactured. Such a damping element 1 comprises a rubber element 2, which generally has a somewhat cylindrical shape and at each end a plate 3,4 of metal or possibly a plastic material. Plates 3,4 are fastened by curing to rubber element 2 and constitute fastening means, designed to fasten damping element 1 between a machine, a motor or the like and a casing, a base plate or the like. Plate 3 has a nut part 5, which is embedded in rubber element 2, and plate 4 has a projecting screw 6.

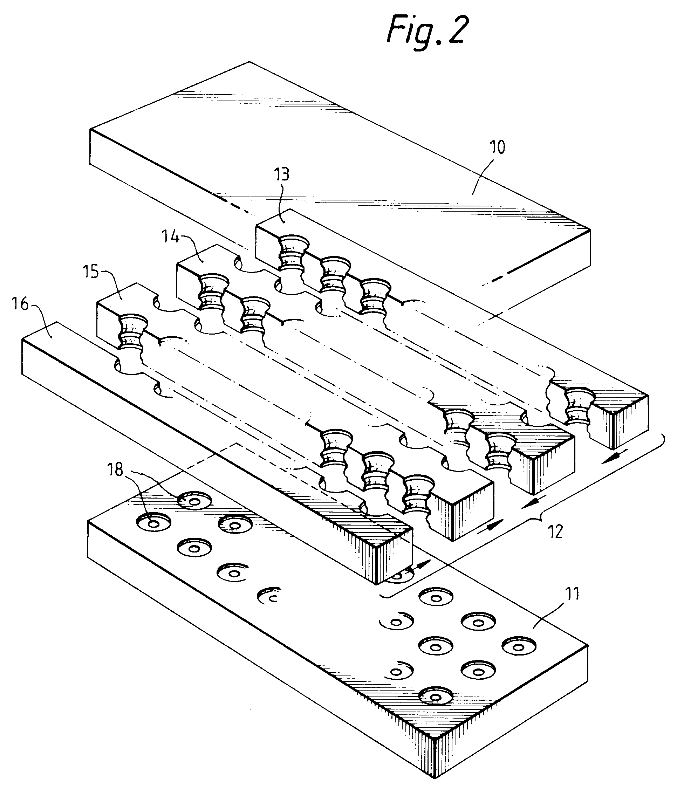

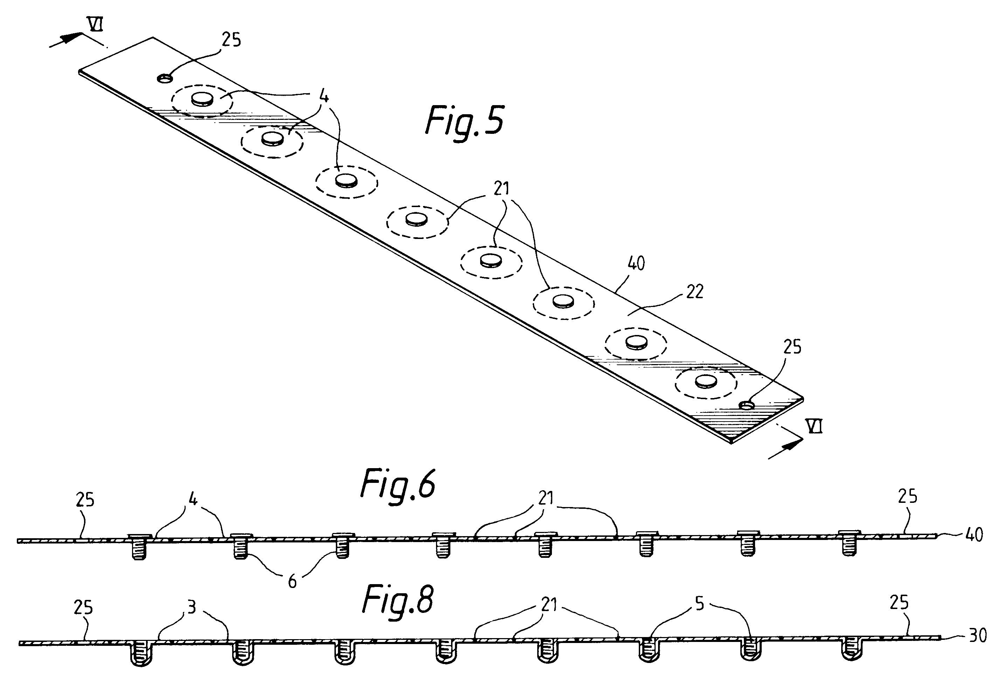

In order to manufacture damping element 1, described above, a conventional molding tool is used, of a type which is schematically shown in an exploded view in Fig. 2. In Fig. 3 a molding cavity is shown and also adjacent parts of the molding tool in cross-section.

The various tool parts of the molding tool include a first tool part 10 (in this text called movable end plate), a second tool part 12 (this in its turn comprises four tool elements 13-16 and is here called central part 12) and a third tool part 11 (here called fastened end plate). The four tool elements 13-16 of central part 12 are movable towards and away from each other, and movable end plate 10 is movable towards the assembled tool elements 13-16 of central part 12 and towards fastened end plate 11. The four tool elements 13-16 form between each other in the assembled central part 12 24 molding cavities 17, placed in three lines with eight molding cavities 17 in each line. Molding cavities 17 can be filled with rubber through feed ducts (not shown). Before plates 10 and 11 are brought to bear on the assembled tool elements 13-16, metal objects 3,4, which are to be fastened by curing to rubber elements 2 and which in this case will become fastening means for the finished damping element 1, are positioned in plates 10 and 11. The metal objects, e.g. objects 4, are positioned in recesses 18 in the respective end plate 10,11. This is done manually. Attempts have been made, but without success, to automatize the work by means of robots.

The above-described technique has a number of drawbacks. A few will be mentioned here:

- It is time-consuming to piece by piece position objects 3,4 in recesses 18;
- When the molding is done, normally a small amount of rubber material will leave molding cavities 17, past the respective metal objects 3,4 and into the respective recess 18 (see Fig. 4, which shows this magnified). Thus, when the finished damping elements 1 have been removed from the tool, rubber residues will remain in recesses 18. All this rubber material must be carefully removed, before any new work operation starts. This work is very time-consuming;
- Metal objects 3,4 often are upset in recesses 18. The possible reason for this is a high working speed. Another reason may be the fact that rubber residues after all have not been completely removed from recesses 18. When the tool then is compressed during the molding, damages will easily arise.

## Brief disclosure of the invention

The objects of the present invention is to eliminate the above-mentioned problems. This can be done by carrying out what is stated in the following patent claims. Additional characterizing features of and aspects on the invention will be set forth in the following description of a preferred embodiment of the invention.

## Brief description of the drawing

In the drawings:

Fig. 1 shows a damping element in a longitudinal section;

Fig. 2 is an exploded view, which schematically shows a molding tool for manufacturing damping elements according to Fig. 1, which molding tool in a somewhat modified version also can be used in the method according to the invention; and

Fig. 3 shows a molding cavity and also adjacent parts of the molding tool in cross-section;

Fig. 4 shows magnified an encircled portion in Fig. 3 and illustrates how the rubber material may leave the molding cavity and flow into a recess for the object, which will be fastened by curing the rubber;

Fig. 5 is a perspective view of a first retainer, which holds a line of first objects, which are to be fastened by curing according to one embodiment of the invention ;

Fig. 6 is a longitudinal section of said first retainer along a line VI-VI in Fig. 5;

Fig. 7 is a perspective view, which illustrates, how three first retainers can be positioned in a tool part according to the invention;

Fig. 8 is a longitudinal view of a second retainer; and

Fig. 9 shows the two retainers as well as a line of rubber elements in a lateral view in cross-section, before said rubber elements have been separated from the main parts of said retainer.

Description of a preferred embodiment

In accordance with the invention the metal objects to be fastened by curing to a rubber element 2, namely fastening means 3 and 4, are parts of larger continuous retainers 30, 40. In accordance with the shown example retainers 30,40 generally are flat strip plates, in which fastening means 3 and 4 are mounted as integrated parts. Each retainer 30,40 has a width, which corresponds to the division between the lines of molding cavities 17 in the assembled tool and its length allows it to contain, by a wide margin, the eight fastening means/metal objects 3,4. The latter are, by means of weakening lines 21, attached to main part 22 of the respective retainer 30,40. Weakening lines 21 define the shape of fastening means/metal objects 3,4 and facilitate a separation of the finished damping element 1 from retainers 30,40 in a later phase of the manufacturing.

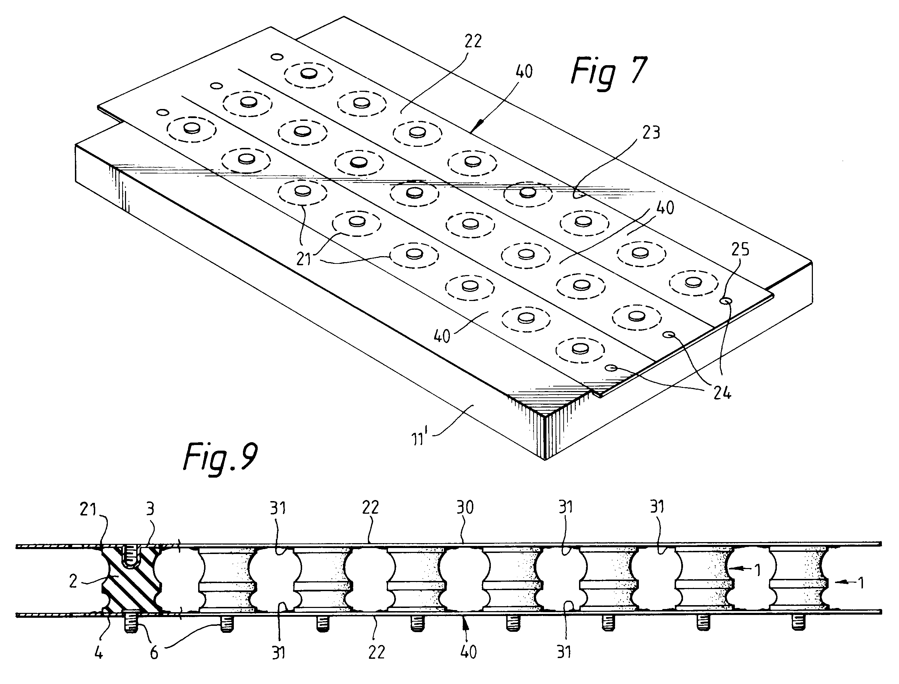

The retainers, e.g. retainers 40, Fig. 7, are positioned adjacent to each other in a recess 23 in end plate 11'. In the lower part of recess 23 there are deeper recesses for screws 6 on the bottom side of retainer 40, and in this way objects 4 will be aligned in front of the respective molding cavity 17 in central part 12, which is designed according to Fig. 2. In order to obtain an accurate positioning of retainers 30,40 and then also the respective metal objects, which are to be fastened by curing, it is also possible to apply projections or other upwardly vertical elements 24 in the bottom of recess 23, which will interact with holes 25 or other female elements in retainers 30,40. In order to position the retainers in movable end plate 10' (not shown but similar to retainer 10 in Fig. 2 and provided with recesses 23 according to Fig. 7), retainers 30 containing fastening means/metal objects 3, which do not have any projections towards end plate 10, end plate 10' must in its corresponding recess for strip-shaped retainers 30 have projections, pins or the like, designed to give retainers 30 the correct position, when they are mounted in the movable end plate. Whether the mounting is done in movable end plate 10' (which corresponds to end plate 10 in Fig. 2) or the mounting is done in fastened end plate 11' , the recesses for fastening means/metal objects 3 and 4 respectively can be viewed as, fully or partially, integrated parts of recesses 23 for strip-shaped retainers 30,40.

Thus, when retainers 30,40 have been positioned in their respective end plates 10',11' and tool elements 13-16 in central part 12 have been assembled, movable end plate 10' is pushed towards central part 12, which in its turn is pressed against fastened end plate 11'. Subsequently the liquid rubber material is introduced into molding cavities 17. Possibly the molding can also be done through compression molding techniques. When the rubber material has solified and adheres to those parts of fastening means/metal objects 3,4, which face the molding cavities, the tool can be opened up and the molded objects removed. The latter will be attached to retainers 30,40, which is shown in Fig. 9. A surplus of rubber material, which when the molding is being done is pressed out from molding cavities 17, is stopped by retainers 30,40 from reaching end plates 10',11'. Possibly escaping rubber material instead gets stuck on that side of the respective retainer 30, which faces central part 12, which is shown in Fig. 9, in which the escaped rubber surplus is designated 31. When damping elements 1 subsequently are separated from main parts 22 of retainers 30,40 along weakening lines 21, this rubber material 31 will be attached to main parts 22 of the retainers, which parts will be treated as scrap material. In case any rubber material adheres to those sides of tool elements 13-16, which face retainers 30,40, this rubber material can be removed through a simple cleaning operation, since these surfaces are entirely flat.

According to the described embodiment the retainers mainly are strip-shaped. However, they can of course have another shape and this shape is to be adjusted to the construction of the tool. Thus, the shown embodiment has to a great extent been adjusted to the specific tool, which according to the described embodiment is used to manufacture the damping elements. Among feasible alternatives the retainers can be made of continuous strips, which gradually are introduced into the molding tool. Also, they can be large plates, which contain several lines of metal objects, designed to be fastened by curing. Principally they do not have to be continuous large retainers but can be designed as large plates, each plate containing only one metal object, designed to be fastened by curing. Instead of weakening lines, other means can also be used to facilitate a separation of the finished objects from the rest of the retainer material. The metal objects may for instance be punched completely loose and then reintroduced in holes in the retainers, the aggregate being held together by a wide tape on that side of the retainers, which is to be turned towards the respective end plate or the corresponding tool part of the molding tool. Also, those objects which are to be fastened by curing or molding do not have to be made of metal. Also, the invention can be used to fasten by molding objects of a rigid plastic material or of other materials, which are distinct from the material in the molded rubber or plastic elements.

## Claims

1. A method when fastening by curing or fastening by molding at least one object (3,4), preferably an object of metal or a rigid plastic material, in the surface of an object (2) of rubber or a plastic material, which is shaped in a molding cavity (17) in a molding tool, which molding cavity in a first direction is defined by that side of said object, which is to be fastened by curing or molding, said object being placed in a first tool part (11'), and in directions perpendicular to said first direction is defined by at least one second tool part (12), which said first and second tool parts are designed to be pushed towards and away from each other, when the tool is to be closed and opened up respectively, **characterized** in that said object (3,4) constitutes a part of a larger retainer (30,40) having a substantially flat extension, which encloses said object, in that said retainer is positioned between said first and second tool parts with the object positioned in said first tool part, in that said rubber or plastic material subsequently is filled in said molding cavity (17), the excess of liquid rubber or plastic material, which is pressed out of the molding cavity, being stopped from coming in contact with that part of the molding tool, in which said object is positioned, since that part of said retainer, which encloses said object, extends in an obstructing way between said first and second tool parts, in that the rubber and the plastic material respectively subsequently is cured or solidified, in that the molded object (1) then is removed, and in that said objects (3,4), which now are integrated parts of the molded object, are separated from the remainder (22) of the retainer.

2. A method according to claim 1, **characterized** in that said retainer is a tape, a strip, a disk or a plate, which contains a plurality of said objects.

3. A method according to claim 1 or 2, **characterized** in that a weakening line (21) or the like is positioned between said object or objects and the main part of said retainer in order to facilitate the subsequent separation.

4. A method according to claim 1 when fastening by curing or fastening by molding at least one object in two opposite surfaces, said molding cavity in two opposite directions being defined by the two objects (3,4) and in the remaining directions by a divisible central tool part (12), **characterized** in that each object is a part of a larger retainer having a mainly flat extension, and in that these retainers are positioned between said central tool part and tool parts disposed on each side of said central tool part.

*Fig.1*

*Fig.3*

*Fig.4*

# Fig.2

Fig.5

Fig.6

Fig.8

EP 0 490 413 A1

Fig 7

Fig. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 650 648 (R. A. LAMBRECHT) <br> * the whole document * <br> --- | 1,2 | B29C31/00 <br> B29C45/14 <br> B29C67/18 |
| A | US-A-3 574 815 (E. E. SEGERSON) <br> * column 5, line 55 - column 6, line 54; figures 1-8 * <br> --- | 1-3 | |
| A | FR-A-2 626 810 (SOC. NOUVELLE DES ETS RYO CATTEAU) <br> * page 6, line 32 - page 8, line 39; figures 1-5 * <br> --- | 1,2 | |
| A | GB-A-407 717 (H. C. LORD) <br> * the whole document * <br> --- | 1-3 | |
| A | EP-A-0 135 648 (J. B. MICHAEL) <br> * page 6, line 1 - line 29; figure 1 * <br> --- | 1 | |
| A | FR-A-1 600 237 (RESSORTS DU NORD) <br> * the whole document * <br> ----- | 1 | TECHNICAL FIELDS SEARCHED (Int. Cl.5) <br><br> B29C |

The present search report has been drawn up for all claims

| Place of search | Date of completion of the search | Examiner |
|---|---|---|
| THE HAGUE | 09 MARCH 1992 | FREGOSI A.M. |